# NOUVEAU FASCICULE DE BREVET EUROPEEN

(11) **EP 1 548 525 B2**
(45) Date de publication et mention de la décision concernant l'opposition: **16.08.2017**
(45) Mention de la délivrance du brevet: 14.08.2013
(21) Numéro de dépôt: 03405924.6
(22) Date de dépôt: 23.12.2003
(51) Int. Cl.: G04B 37/22, C04B 41/90

(54) **Elément en céramique pour boîte de montre et procédé de fabrication de cet élément**
Keramisches Element für Uhrengehäuse und Verfahren zu seiner Herstellung
Ceramic element for watch case and method of manufacturing the same

(43) Date de publication de la demande: 29.06.2005
(73) Titulaire: ROLEX SA, 1211 Genève 24 (CH)
(72) Inventeur: Grippo, Eric, 1207 Genève (CH)
(74) Mandataire: Moinas & Savoye SARL

(56) Documents cités:
- EP-A- 0 230 853
- EP-A- 0 566 820
- EP-A1- 0 686 706
- EP-A1- 1 286 234
- EP-A2- 0 221 492
- WO-A1-87/04812
- WO-A1-91/14017
- CH-A- 652 560
- CH-A3- 636 238
- CH-B- 702 127
- DE-A1- 2 533 524
- JP-A- H04 006 263
- JP-A- H07 025 199
- JP-A- S60 141 647
- JP-A- 2003 253 473
- JP-A- 2003 268 568
- US-A- 4 226 082
- US-A- 4 699 850
- US-A- 4 943 486
- US-A- 5 358 597
- US-A- 5 972 233
- US-A2- 4 213 840
- PATENT ABSTRACTS OF JAPAN vol. 0050, no. 05 (P-044), 14 janvier 1981 (1981-01-14) & JP 55 135769 A (KAWAGUCHIKO SEIMITSU KK), 22 octobre 1980 (1980-10-22)

## Description

La présente invention se rapporte à un procédé de fabrication d'élément en céramique destiné à être rapporté sur une boîte de montre, dont la surface visible comporte des motifs, ainsi qu'à un élément en céramique obtenu par ce procédé.

Il a déjà été proposé dans le DE 2'533'524 et dans le EP 0'230'853 un procédé pour déposer une couche métallisée sur un substrat en céramique qui consiste à déposer une première couche de CuO ou de Ti d'au moins 100 nm suivie d'une seconde couche de cuivre, d'argent, d'or ou de nickel. L'adhésion entre les deux couches est obtenue par passage au four. Dans le cas du cuivre et du CuO, la température du four doit se situer entre le point eutectique du CuO et le point de fusion du cuivre soit entre 1068° et 1078°C, température qui est totalement incompatible avec l'utilisation d'une résine photosensible, en sorte que de tels procédés ne permettent pas de garder le masque en vue d'une opération ultérieure d'électroformage.

Etant donné que ces procédés ne permettent pas d'utiliser des matériaux photosensibles, selon des techniques couramment utilisées pour la fabrication de composants électroniques notamment, il ne peuvent donc pas être utilisés pour faire croître sélectivement des motifs tels que des chiffres par électroformage, puisque de tels masques ne résisteraient pas à la température du traitement de fixation des couches au four.

On a également proposé dans le CH 636' 238 un procédé pour former des signes sur des parties de montres en matériau non conducteur électrique sur lequel on dépose sous vide une couche métallique tel que du Cr, on recouvre cette couche métallique d'une résine photosensible dans laquelle on forme des ouvertures correspondant à la forme des signes, et on dépose par voie électrochimique une couche d'un second métal tel que Au, Ni, Rh, Va, qui se dépose sur la première couche métallique à travers les ouvertures ménagées dans la couche de résine photosensible. On dissout ensuite la résine, puis on attaque chimiquement la première couche métallique jusqu'à ce que le substrat réapparaisse.

Le but de la présente invention est de remédier, au moins en partie, aux inconvénients susmentionnés.

A cet effet, cette invention a tout d'abord pour objet un procédé de fabrication d'un élément en céramique destiné à être rapporté sur une boîte de montre et dont la surface visible présente des motifs, selon la revendication 1. Elle a ensuite pour objet un élément en céramique, selon la revendication 4.

L'avantage essentiel de cette invention est de permettre la formation sélective de motifs, sans aucune limitation de forme, donnant naissance à un produit nouveau, offrant des possibilités esthétiques originales, permettant de renouveler et d'améliorer l'aspect des montres, en particulier celui des montres à lunettes fixes et tournantes.

Le procédé selon la présente invention permet d'obtenir une excellente adhésion des motifs en relief à la surface de l'élément en céramique, ce qui présente une grande importance, surtout lorsque les motifs sont en relief, puisqu'une boîte de montre-bracelet en particulier est très exposée à toutes sortes d'agressions externes.

Avantageusement, la surface visible sur laquelle les motifs sont formés est une surface tronconique ou en forme de tronc de pyramide, qui nécessite de ce fait une technique de masquage particulière.

D'autres particularités et avantages apparaîtront au cours de la description qui suit et qui sera faite en se référant aux dessins annexés qui illustrent, schématiquement et à titre d'exemple, une forme d'exécution et une variante de la mise en oeuvre du procédé objet de la présente invention, ainsi que les éléments en céramiques obtenus par ce procédé.
Les figures 1 à 4 illustrent différentes phases du procédé de préparation d'un élément en céramique vu en coupe, destiné à être rapporté sur une boîte de montre, objet de la présente invention;
les figures 5 et 6 illustrent une forme d'exécution de formation de motifs en relief;
la figure 7 illustre une variante pour l'obtention de motifs à la surface de l'élément en céramique;
la figure 8 est une vue partielle en coupe d'un anneau en céramique pour lunette, selon la présente invention.

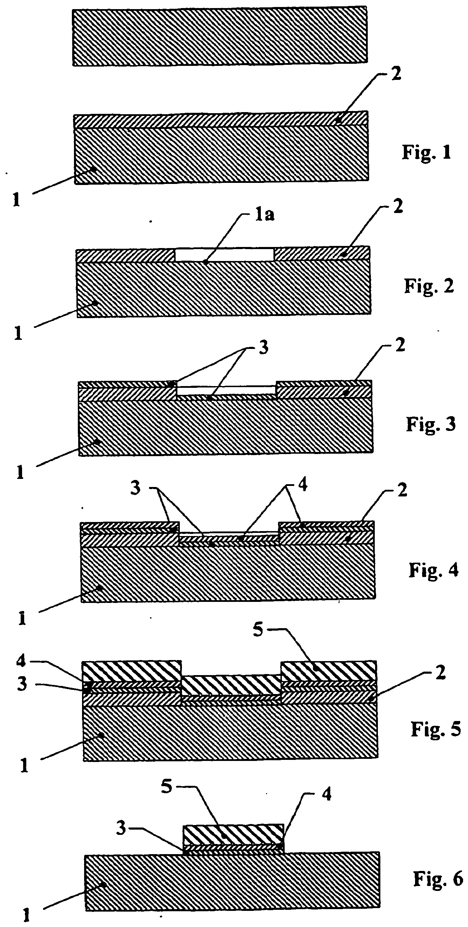

La figure 1 illustre un substrat fritté 1 en ZrO₂, Al₂O₃ ou mélange des deux à la surface duquel une couche 2 d'un polymère photosensible est déposée en vue de la formation d'une couche conformée pour le dépôt sélectif des motifs. L'épaisseur de cette couche 2 dépend de la variante utilisée pour former les motifs, selon que ceux-ci seront sensiblement en surface ou en relief.

On applique un masque sur cette couche 2 de polymère photosensible type RISTON® MM150, de manière à insoler sélectivement cette couche 2 sous une lumière UV pour polymériser les parties de la couche 2 de polymère photosensibles qui doivent rester sur le substrat 1. On développe alors cette couche 2 dans un bain de Na₂CO₃ à 0,85% selon les indications du fournisseur du polymère photosensible, pour dissoudre les parties non insolées de la couche 2 pour mettre à nu des portions de surfaces 1a du substrat 1. Ces portions présentent les formes choisies pour la formation des motifs, comme illustré par la figure 2. Ce mode opératoire correspond à un processus photolithographique standard.

Il y a lieu de remarquer que dans les exemples illustrés, le substrat 1 représenté en coupe par les figures 1 à 7 correspond en réalité à une portion de l'élément en céramique objet de la présente invention. Cette portion peut correspondre notamment à une section radiale de cet élément en céramique constitué par un anneau circulaire de section rectangulaire. De préférence, cet anneau a une forme tronconique, de sorte que la surface visible 1a est inclinée par rapport à l'axe de révolution de cet anneau.

Pour cette raison, le masque utilisé pour la formation des motifs dans la couche de polymère 2 n'est pas un masque classique, mais un masque en polymère, thermoformé pour lui donner une forme complémentaire à celle du substrat en céramique. Ce masque en polymère qui présente une certaine souplesse est appliqué sur la couche 2 avec une pression suffisante pour qu'il épouse cette couche 2 sur toute sa surface.

Une fois cette opération de formation des motifs effectuée, on dispose le substrat 1 ainsi revêtu sélectivement par la couche 2, dans une enceinte de revêtement sous vide, dans laquelle une première couche d'accrochage 3 de Ti, Ta, Cr ou Th d'au moins 100 nm est déposée (figure 3) par la technique de dépôt physique en phase vapeur (PVD) et pulvérisation cathodique magnétron qui permet d'assurer une adhésion de la couche d'accrochage 3, supérieure à celle qui serait obtenue en utilisant la technique PVD sans magnétron. En outre, grâce à la pulvérisation cathodique magnétron, la température du substrat 1 peut être maintenue basse, bien en dessous de 100°C pendant l'opération de dépôt. C'est grâce à l'utilisation de cette technique de dépôt qu'il est possible d'effectuer le dépôt de la couche d'accrochage sur le substrat 1 revêtu sélectivement de la couche de polymère 2 et d'assurer une excellente adhésion de cette couche d'accrochage 3 au substrat 1, sans devoir effectuer un traitement thermique à une température amenant à la destruction le polymère.

Tout en maintenant le vide dans l'enceinte de dépôt, on forme une seconde couche 4 (figure 4) par pulvérisation cathodique magnétron en utilisant une cible du type Au, Ag, Pt, Pd, TiN, CrN, Ni. L'épaisseur de cette seconde couche est d'au moins 100 nm, de préférence, comprise entre 500 nm et 15 µm.

L'équipement utilisé pour effectuer le dépôt sous vide par pulvérisation cathodique au magnétron comprend:
- une enceinte cylindrique en acier inoxydable avec système de pompage turbomoléculaire et pompe rotative à palettes;
- un porte-substrat de type carrousel à axe de rotation vertical et substrats positionnés verticalement. Possibilité de réaliser une pulvérisation cathodique RF polarisée sur le porte-substrat;
- deux cathodes magnétrons rectangulaires verticales montées face au carrousel selon un angle de 120° par rapport à l'axe du carrousel;
- deux cathodes:
   une cible Ti_{99,99}
   une cible Au_{99,99}
- une alimentation des cathodes par un générateur RF 13,56 MHz de 600 W avec une boîte d'accord d'impédance manuel;
- une alimentation en gaz (pureté: 5,7-6,0) par débitmètre de masse;
- un contrôle de pression par jauge Penning pour le contrôle du vide limite et par jauge capacitive (mesure absolue) pour le contrôle de la pression de travail.

Les pièces ont été nettoyées dans un bain aux ultrasons dans un mélange de 20% d'alcool isopropylique et de 80% d'eau déionisée, pendant cinq minutes. Séchage au pistolet à azote.

Les substrats sont décapés par mise sous vide de l'enceinte et pompage jusqu'à une pression inférieure à 5 × 10⁻² Pa. Un nettoyage ionique de la surface des substrats est exécuté par pulvérisation inversée:
- puissance RF sur porte-substrat:> 100 W
- flux d'argon:> 15 cm³/min
- flux d'oxygène:> 5 cm³/min
- pression totale:< 5 Pa
- durée: 20-30 min

Les conditions de dépôt de la sous-couche de titane sont les suivantes:
- puissance RF sur la cathode:> 150 W
- flux d'argon:> 5 cm³/min
- pression d'argon:< 5 Pa
- l'épaisseur de la couche est >100 nm, de préférence >100 nm et <1500 nm

Tout en maintenant le vide dans l'enceinte, les substrats sont déplacés par rotation du carrousel vers une petite cathode équipée de la cible Au_{99,99}. Les conditions du dépôt sont les suivantes:
- puissance RF sur la cathode:> 50 W
- flux d'argon:> 10 cm³/min
- pression d'argon:< 5 Pa
- l'épaisseur de la couche est >100 nm, de préférence, >500 nm et <15 µm

Les substrats ainsi obtenus sont entièrement recouverts de la couche d'accrochage en titane recouverte de la couche d'or, comme illustré par la figure 4.

Suite au dépôt de cette seconde couche 4, on sort le substrat de l'enceinte de dépôt sous vide et on a le choix entre deux solutions.

Selon une première forme d'exécution, on soumet le substrat 1 sélectivement revêtu de la couche de polymère 2 et des couches 3 et 4 (figure 4), à une opération d'électroformage, en utilisant le même métal noble que celui utilisé pour la seconde couche 4, dans cet exemple, l'or. Tout l'avantage de l'invention réside dans le pouvoir de garder le masque polymère intact pour son utilisation dans l'opération ultérieure d'électroformage sélectif. On dépose donc par électroformage une couche supplémentaire 5 d'épaisseur désirée. rée. Le bain d'or utilisé dans ce cas est à forte teneur en Au et permet un électroformage d'au moins 0,10 mm, de préférence, de quelque dixièmes de millimètres d'épaisseur. Les condition opératoires du processus d'électroformage sont celles indiquées par les fournisseurs du bain d'électroformage. La durée du processus est fonction de l'épaisseur de la couche déposée. La vitesse de croissance du dépôt est d'environ 10 µm/h.

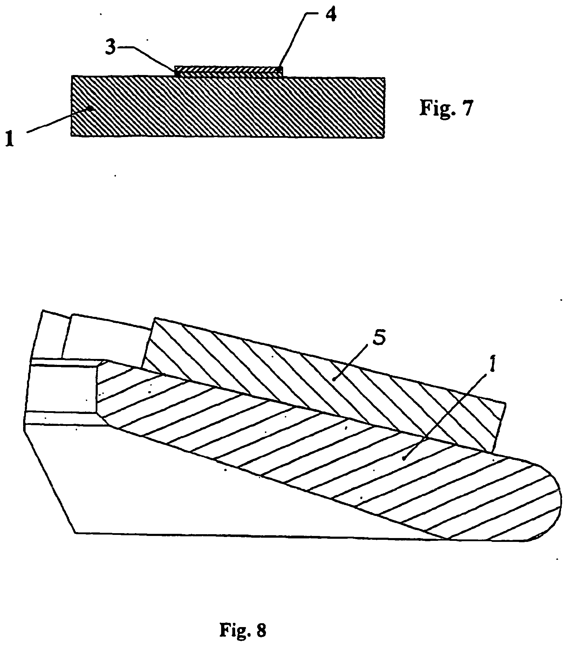

Selon une deuxième forme d'exécution illustrée par la figure 7, après la sortie du substrat revêtu sélectivement des couches 3 et 4, on dissout la couche de polymère 2, comme on l'a fait précédemment pour passer de l'étape de la figure 5 à celle de la figure 6, en sorte qu'il ne reste sur le substrat 1 que les couches 3 et 4 qui se trouvaient sur les parties 1a où le substrat en céramique n'était pas recouvert par la couche de polymère 2 dissoute. Dans ce cas, compte tenu de l'épaisseur des couches 3, 4, les motifs sont pratiquement à la surface du substrat 1.

En variante, au lieu d'être en forme d'anneau tronconique, l'élément en céramique, objet de la présente invention, pourrait être en forme de cadre polygonal à face inclinée par rapport à l'axe central de cet élément et constituer ainsi un tronc de pyramide.

La figure 8 illustre un anneau en céramique 1, de forme tronconique destiné à être rapporté par déformation élastique sur une lunette. Cet anneau 1 est muni de motifs en relief 5, selon la forme d'exécution de la figure 5.

## Revendications

1. Procédé de fabrication d'élément en céramique destiné à être rapporté sur une boîte de montre et dont la surface visible présente des motifs, **caractérisé en ce que** l'on dépose sélectivement sur ladite surface visible une couche soluble de polymère photosensible (2) dont l'épaisseur est au moins égale à la hauteur desdits motifs, on dépose sous vide sur ladite surface ainsi recouverte sélectivement une première couche d'accrochage (3) de type Ti, Ta, Cr ou Th d'au moins 100 nm par dépôt physique en phase vapeur(PVD) avec pulvérisation cathodique magnétron suivie, sans mise à l'air, d'un dépôt PVD de ladite seconde couche (4) de Au, Pt, Ag, Ni, Pd, TiN, CrN, ZrN ou leurs alliages d'au moins 100 nm d'épaisseur et on dissout ladite couche soluble (2).

2. Procédé selon la revendication 1 selon lequel, avant de dissoudre ladite couche soluble (2), on dépose une couche supplémentaire (5) d'un métal noble ou alliage de métaux nobles par électroformage.

3. Procédé selon la revendication 2, selon lequel on applique sur ladite couche (2) de polymère photosensible un masque en polymère thermoplastique réalisé par thermoformage.

4. Elément en céramique destiné à être rapporté sur une boîte de montre et dont la surface visible présente des motifs **caractérisé en ce que** ces motifs sont fixés sur cette surface par une première couche d'accrochage (3) de Ti, Ta, Cr ou Th d'au moins 100 nm, recouverte d'au moins une seconde couche (4) du groupe Au, Ag, CrN, Ni, Pt, TiN, ZrN, Pd ou leurs alliages d'au moins 100 nm d'épaisseur.

5. Elément en céramique selon la revendication 4, dont la forme est circulaire avec la face formant ladite surface visible de forme tronconique.

6. Elément en céramique selon la revendication 4, dont la forme est celle d'un cadre polygonal avec la face formant ladite surface visible en forme de tronc de pyramide.

7. Elément en céramique selon l'une des revendications 4 à 6, dans lequel ladite céramique est du ZrO₂, de l'Al₂O₃ ou un mélange des deux.

8. Elément en céramique selon l'une des revendications 4 à 7, dans lequel, lesdits motifs sont formés par une couche supplémentaire (5) d'au moins 0,10 mm d'épaisseur, du même métal ou alliage que ladite seconde couche (4).

9. Boîte de montre comprenant élément en céramique selon l'une des revendications 4 à 8.

## Patentansprüche

1. Verfahren zum Herstellen eines keramischen Elementes, das zum Einsatz in einem Uhrengehäuse vorgesehen ist und dessen sichtbare Oberfläche Motive aufweist, **dadurch gekennzeichnet, dass** auf der sichtbaren Oberfläche gezielt eine lösliche Schicht (2) photosensitiven Polymers aufgebracht wird, deren Dicke wenigstens gleich der Höhe der Motive ist, dass unter Vakuum auf der somit bedeckten Oberfläche gezielt eine erste Haftschicht (3) des Typs Ti, Ta, Cr oder Th von wenigstens 100 nm durch physikalisches Abscheiden aus der Gasphase (PVD) mit nachfolgender kathodischer Magnetronpulverisierung abgeschieden wird, gefolgt von frei von Kontakt mit Luft einem PVD-Ablagern der zweiten Schicht (4) von Au, Pt, Ag, Ni, Pd, TiN, CrN, ZrN oder deren Legierungen mit einer Dicke von wenigstens 100 nm und dass die lösliche Schicht (2) aufgelöst wird.

2. Verfahren nach Anspruch 1, bei dem vor dem Auflösen der löslichen Schicht (2) durch Elektroformung eine zusätzliche Schicht (5) aus einem Edelmetall oder einer Legierung aus Edelmetallen aufgetragen wird.

3. Verfahren nach Anspruch 2, bei dem auf die Schicht (2) aus photosensitivem Polymer eine durch Wärmeformen ausgeführte Maske aus thermoplastischem Polymer aufgebracht wird.

4. Keramisches Element, das zum Einsatz in einem Uhrengehäuse vorgesehen ist und dessen sichtbare Oberfläche Motive aufweist, **dadurch gekennzeichnet, dass** die Motive auf der Oberfläche durch eine erste Haftschicht (3) von Ti, Ta, Cr oder Th von wenigstens 100 nm fixiert sind, die von wenigstens einer zweiten Schicht (4) aus der Gruppe von Au, Ag, CrN, Ni, Pt, TiN, ZrN, Pd oder deren Legierungen mit einer Dicke von wenigstens 100 nm bedeckt ist.

5. Keramisches Element nach Anspruch 4, dessen Gestalt kreisförmig mit einer die sichtbare Oberfläche bildenden Seite von kegelstumpfartiger Gestalt ist.

6. Keramisches Element nach Anspruch 4, dessen Gestalt die eines polygonalen Rahmens mit einer die sichtbare Oberfläche bildenden Seite von pyramidenstumpfartiger Gestalt ist.

7. Keramisches Element nach einem der Ansprüche 4 bis 6, **dadurch gekennzeichnet, dass** die Keramik aus ZrO₂, Al₂O₃ oder einer Mischung davon ist.

8. Keramisches Element nach einem der Ansprüche 4 bis 7, bei dem die Motive durch eine zusätzliche Schicht (5) mit einer Dicke von wenigstens 0,10 mm aus dem gleichen Metall oder der gleichen Legierung wie die zweite Schicht (4) gebildet sind.

9. Uhrengehäuse mit einem keramischen Element nach einem der Ansprüche 4 bis 8.

## Claims

1. A process for manufacturing a ceramic element intended to be fitted onto a watch case and the visible surface of which has features, wherein a soluble layer (2) of a photosensitive polymer is selectively deposited on said visible surface, the thickness of said soluble layer being at least equal to the height of said features, a first tie layer (3) of the Ti, Ta, Cr or Th type is vacuum-deposited by magnetron sputtering with a thickness of at least 100 nm by physical vapor deposition (PVD) on said surface thus selectively coated, followed, without venting atmosphere, by PVD deposition of said second layer (4) made of Au, Pt, Ag, Ni, Pd, TiN, CrN, ZrN or alloys thereof with a thickness of at least 100 nm, and then said soluble layer (2) is dissolved.

2. The process as claimed in claim 1, in which, before said soluble layer (2) is dissolved, an additional layer (5) of a noble metal or an alloy of noble metals is deposited by electroforming.

3. The process as claimed in claim 2, in which a thermoplastic polymer mask produced by thermoforming is applied to said photosensitive polymer layer (2).

4. A ceramic element intended to be fitted onto a watch case and the visible surface of which has features, wherein these features are fixed to this surface via a first Ti, Ta, Cr or Th tie layer (3) at least 100 nm in thickness, covered by at least one second layer (4) of the group comprising Au, Ag, CrN, Ni, Pt, TiN, ZrN, Pd or alloys thereof, with a thickness of at least 100 nm.

5. The ceramic element as claimed in claim 4, the shape of which is circular, the face forming said visible surface being of frustoconical shape.

6. The ceramic element as claimed in claim 4, the shape of which is that of a polygonal frame, that face forming said visible surface being of frustopyramidal shape.

7. The ceramic element as claimed in one of claims 4 to 6, in which said ceramic is ZrO₂, Al₂O₃ or a mixture of the two.

8. The ceramic element as claimed in one of claims 4 to 7, in which said features are formed by an additional layer (5) with a thickness of at least 0.10 mm, made of the same metal or alloy as said second layer (4).

9. A watch case comprising a ceramic element according to one of claims 4 to 8.
